# EUROPÄISCHE PATENTSCHRIFT

(11) **EP 3 126 683 B1**
(45) Veröffentlichungstag und Bekanntmachung des Hinweises auf die Patenterteilung: **13.03.2019**
(21) Anmeldenummer: 15712932.1
(22) Anmeldetag: 31.03.2015
(51) Int. Cl.: F16B 13/14

(54) **BEFESTIGUNGSANORDNUNG MIT AXIAL FIXIERTEM MASSEAUSPRESSTELLER**
FIXING ASSEMBLY WITH AXIALLY FIXED MASS PRESSER PLATE
SYSTÈME DE FIXATION DOTÉ D'UNE PLAQUE D'ÉJECTION DE MASSE FIXÉE AXIALEMENT

(30) Priorität: 01.04.2014 EP 14163063
(43) Veröffentlichungstag der Anmeldung: 08.02.2017
(73) Patentinhaber: Hilti Aktiengesellschaft, 9494 Schaan (LI)
(72) Erfinder: HAKENHOLT, Christoph, 6800 Feldkirch (AT); WILDERMUTH, Anke, 9472 Grabs (CH)
(74) Vertreter: Hilti Aktiengesellschaft Corporate Intellectual Property
(86) Internationale Anmeldenummer: PCT/EP2015/056964
(87) Internationale Veröffentlichungsnummer: WO 2015/150357

(56) Entgegenhaltungen:
- EP-A2- 0 221 020
- DE-A1- 2 224 023
- DE-A1- 3 304 071
- DE-A1- 19 813 089
- GB-A- 442 832
- US-A- 3 240 379
- US-A- 4 514 125

## Beschreibung

Die Erfindung betrifft eine Befestigungsanordnung mit einer Schraube, insbesondere einer selbstschneidenden Schraube, gemäss dem Oberbegriff des Anspruchs 1. Eine solche Befestigungsanordnung ist ausgebildet
- mit einer Schraube, welche einen Schaft mit einem vorderen Ende zum Einführen in ein Bohrloch in einem Substrat und zumindest eine Gewindewendel aufweist, wobei die Gewindewendel am Schaft angeordnet ist, und
- mit einer Auspresseinheit, welche ein Massenreservoir enthaltend eine Masse zum Verfüllen eines Spalts zwischen dem Schaft und der Wand des Bohrlochs, einen Auspressteller, an welchen das vordere Ende des Schafts zum Auspressen der Masse aus dem Massenreservoir heranführbar ist, und ein Halteelement zum Festlegen des Auspresstellers im Bohrloch aufweist, wobei am Halteelement einerseits der Auspressteller und andererseits ein Anschlagelement zum Anschlagen am Mund des Bohrlochs angeordnet ist, und wobei das Halteelement das Anschlagelement mit dem Auspressteller verbindet.

Aus der DE 198 20 671 A1 ist ein Verfahren zur Verankerung einer selbstschneidenden Schraube in einem Bohrloch in Beton bekannt, bei dem zuerst das Bohrloch ausgeführt wird und dann in das Bohrloch eine Mörtelmasse eingebracht wird. Anschliessend wird die selbstschneidende Schraube in das Bohrloch eingeschraubt, wobei die Spitze der selbstschneidenden Schraube in die Mörtelmasse eintaucht und einen Teil der Mörtelmasse entlang des Schafts zurück, also in Richtung zum Mund des Bohrlochs, verdrängt. Im Endergebnis soll das gesamte Bohrloch mit der Mörtelmasse ausgefüllt sein, so dass die selbstschneidende Schraube von ausgehärteter Mörtelmasse umgeben ist.

Die DE 102011003127 A1 beschreibt ein weiteres Verfahren zur Verankerung einer selbstschneidenden Schraube. Die DE 102011003127 A1 schlägt vor, in das Bohrloch eine Kartusche einzusetzen, die beim Setzen der Schraube von der Schraube zerdrückt wird. Dadurch wird aushärtbare Masse freigesetzt. Durch den Einsatz eines Bundbohrers soll eine definierte Bohrlochtiefe gewährleistet werden. Damit kann gemäss DE 102011003127 A1 eine potenziell aufwändige Massedosierung beim Setzvorgang entbehrlich werden.

Die US 4,514,125 A, die US 3,240,379 A und die GB 442 832 A beschreiben Ankeranordnungen, bei denen Massen durch Einwirkungen von Schrauben verdrängt werden. Weitere Ankeranordnungen, bei denen Massen durch Kolbenwirkung verdrängt werden, sind aus der DE 2 224 023 A und der DE 198 13 089 A1 bekannt.

Aufgabe der Erfindung ist es, eine Befestigungsanordnung mit einer Schraube anzugeben, welche bei besonders guten Lastwerten und besonders hoher Zuverlässigkeit besonders einfach und zuverlässig setzbar ist.

Die Aufgabe wird erfindungsgemäss durch eine Befestigungsanordnung mit den Merkmalen des Anspruchs 1 gelöst. Bevorzugte Ausführungsformen sind in den abhängigen Ansprüchen angegeben.

Eine erfindungsgemässe Befestigungsanordnung ist dadurch gekennzeichnet, dass das das Anschlagelement mit dem Auspressteller verbindende Halteelement spiralförmig ausgeführt ist.

Ein erster Grundgedanke der Erfindung kann darin gesehen werden, an der Schraube eine Auspresseinheit mit einem Massenreservoir sowie einem Auspressteller vorzusehen, wobei das Massenreservoir beim Einschrauben der Schraube in ein Bohrloch zwischen dem Auspressteller und dem vorderen Ende der Schraube ausgedrückt wird, mit der Folge, dass die im Massenreservoir enthaltene Masse in den Spalt, insbesondere Ringspalt, zwischen dem Schaft und der Bohrlochwand gelangt. Ein weiterer Grundgedanke kann darin gesehen werden, die Auspresseinheit mit einem Halteelement auszustatten, welches den Auspressteller beim Einschrauben des Schafts im Bohrloch axial festlegt. Da der Auspressteller durch das Halteelement im Bohrloch axial festliegt, der Schaft der Schraube hingegen beim Einschrauben der Schraube axial immer tiefer in das Bohrloch eindringt, kommt es beim Einschrauben der Schraube zu einer axialen Annäherung zwischen dem Schaft und dem Auspressteller. Hierdurch wird das Volumen zwischen Auspressteller und Schaft verkleinert, so dass das zwischen Auspressteller und Schaft befindliche Massenreservoir vom Auspressteller ausgedrückt wird.

Mit der Erfindung kann also eine verfüllte und/oder verklebte Verschraubung realisiert werden, so dass besonders hohe Lastwerte der Schraube im Substrat erhalten werden können, insbesondere in statischen, dynamischen und/oder seismischen Lastsituationen. Dabei wird nach der Erfindung dem Anwender eine definierte Massemenge vorgegeben, so dass eine besonders hohe Zuverlässigkeit gegeben ist. Zugleich ist der Setzvorgang der erfindungsgemässen Schraube für den Anwender besonders einfach. Denn da das Ausbringen der Masse nach der Erfindung automatisch direkt beim Setzen erfolgen kann, ist kein zusätzlicher Arbeitsschritt zum Einbringen der Masse in das Bohrloch mittels einer separaten Pumpe erforderlich. Darüber hinaus kann nach der Erfindung mit variablen Bohrlochtiefen gearbeitet werden, ohne dass die Menge der erhärtbaren Masse jeweils aufwändig bohrlochtiefenabhängig neu abgemessen werden muss. Insbesondere kann erfindungsgemäss der Beginn des Auspressvorgangs aus dem Massenreservoir besonders einfach und zuverlässig durch die Lage des Anschlagelements am Halteelement festgelegt werden, so dass besonders gleichmässige Setzergebnisse erhalten werden, was die Zuverlässigkeit der gesetzten Befestigungsanordnung noch weiter erhöht.

Zum axialen Festlegen des Auspresstellers im Bohrloch ist das Halteelement an seiner einen Seite am Auspressteller befestigt und weist auf seiner anderen Seite ein Anschlagelement auf, welches beim Einbringen der Auspresseinheit in das Bohrloch am Mund des Bohrlochs zur Anlage kommt. Damit sorgt das Halteelement für eine mechanische, vorzugsweise zugfeste, Verbindung zwischen dem Substrat und dem Auspressteller. Für einen besonders kompakten Aufbau kann es vorteilhaft sein, dass der Auspressteller endseitig am Halteelement angeordnet ist. Aus demselben Grunde kann es zusätzlich oder alternativ vorteilhaft sein, dass das Anschlagelement endseitig am Halteelement angeordnet ist. Insbesondere können der Auspressteller und das Anschlagelement an gegenüberliegenden Endbereichen des Halteelements angeordnet sein.

Unter dem Mund des Bohrlochs kann insbesondere ein Oberflächenbereich des Substrats verstanden werden, der das Bohrloch umgibt. Soweit hier von axial, radial und der Umfangsrichtung die Rede ist, kann sich dies insbesondere auf die Längsachse des Bohrlochs, des Schafts und/oder der Schaube beziehen.

Besonders vorteilhaft ist es, dass die Schraube eine selbstschneidende Schraube ist, also eine Schraube, deren zumindest eine Gewindewendel ihr Gegengewinde im Substrat selbst schneiden kann. Insbesondere kann die Schraube eine Betonschraube sein, also eine Schraube, bei der sich die zumindest eine Gewindewendel ihr Gegengewinde in einem Betonsubstrat selbst schneiden kann. Grundsätzlich könnte die Erfindung aber auch bei Schrauben zum Einsatz kommen, die in ein bestehendes Innengewinde eingeschraubt werden.

Das Massenreservoir enthält zweckmässigerweise eine fliessfähige Masse, die bei Druck zwischen dem Auspressteller und der vorderen Stirnseite des Schafts aus dem Massenreservoir heraus in den Ringspalt zwischen Schaft und Bohrlochwand fliessen kann. Insbesondere kann es sich um eine aushärtbare Masse handeln, die vorzugsweise nach dem Einfliessen zwischen in den Spalt zwischen Schaft und Bohrlochwand aushärtet. Die Masse kann somit insbesondere eine fliessfähige, aushärtbare Füllmasse sein. Bei der Masse kann es sich beispielsweise um einen Mehrkomponenten-Kunstharzmörtel auf der Basis von Polyester- oder Epoxidharz handeln, der durch Vermischung der Komponenten aktiviert wird. In diesem Fall können die Komponenten im Massenreservoir getrennt vorliegen und beim Auspressen gemischt werden. Bevorzugt handelt es sich bei der Masse um aushärtbaren Klebstoff. Der Klebstoff kann vorzugsweise durch Druck, beispielsweise durch Druck des Auspresstellers, aktivierbar sein kann. Somit kann der Klebstoff durch die Wirkung des Auspresstellers aktiviert werden und anschliessend zwischen Schaft und Bohrlochwand aushärten. Der Klebstoff kann aber auch erst durch den Druck zwischen Schaft und Bohrlochwand aktiviert werden. Bei dem Klebstoff kann es sich auch um einen mikroverkapselten Klebstoff handeln, der durch Aufbrechen der Mikroverkapselung aktiviert wird.

Auf dem Schaft können eine oder mehrere Gewindewendeln vorgesehen sein, die vom Schaft radial vorstehen. Die Gewindewendel geht insbesondere vom vorderen Ende des Schafts aus. An dem dem vorderen Ende des Schafts entgegengesetzten rückwärtigen Ende des Schafts ist vorzugsweise eine Lastangriffseinrichtung zum Einleiten von Zugkräften in den Schaft angeordnet, beispielsweise ein Schraubenkopf, der radial über den Querschnitt des Schafts hervorsteht. Der Schaft kann zumindest annähernd zylindrisch ausgeführt sein und/oder aus Metall bestehen. Der Auspressteller kann beispielsweise aus Kunststoff bestehen, was im Hinblick auf den Herstellungsaufwand vorteilhaft sein kann.

Das Halteelement muss insbesondere Zugkräfte zwischen dem Auspressteller und dem Bohrlochmund aufnehmen und kann somit insbesondere als zugfestes Halteelement ausgebildet sein. Es kann beispielsweise ein Band sein, welches den Auspressteller und das Anschlagelement verbindet. Das Halteelement kann ein Kunststoffmaterial und/oder ein Metallmaterial aufweisen.

Erfindungsgemäss ist das Halteelement spiralförmig ausgebildet. Unter anderem kann hierdurch in besonders einfacher und zuverlässiger Weise die Zahl der Kreuzungen des Halteelements mit der Gewindewendel reduziert werden, so dass die Zuverlässigkeit noch weiter gesteigert werden kann. Insbesondere kann erreicht werden, dass es zu keiner Überkreuzung kommt. Das spiralförmige Halteelement und die Gewindewendel weisen zweckmässigerweise denselben Drehsinn auf. Zweckmässigerweise entspricht die Ganghöhe des spiralförmigen Halteelements zumindest annähernd der Ganghöhe der Gewindewendel, damit das Halteelement stets zwischen der Gewindewendel verlaufen kann. Insbesondere bei grossen Ganghöhen ist eine exakte Übereinstimmung aber nicht immer erforderlich. Das spiralförmige Halteelement bildet vorzugsweise ein Gegengewinde zur Gewindewendel. Hierdurch kann einem Mitdrehen des Halteelements beim Einschrauben der Schraube entgegengewirkt werden. Das spiralförmige Halteelement ist insbesondere zur zumindest bereichsweisen Aufnahme des Schafts vorgesehen.

Unter der Ganghöhe kann in fachüblicher Weise insbesondere der Abstand zwischen zwei Gewindestufen entlang der Längsachse des Schafts und/oder der axiale Weg verstanden werden, der durch eine Umdrehung der Gewindewendel zurückgelegt wird.

Eine bevorzugte Weiterbildung der Erfindung liegt darin, dass der Schaft eine Nut zum zumindest bereichsweisen Aufnehmen des Halteelements aufweist. Hierdurch kann einer unerwünschten Reibung am Halteelement entgegengewirkt werden, was die Zuverlässigkeit noch weiter erhöhen kann. Insbesondere, da das Halteelement erfindungsgemäß spiralförmig ausgebildet ist, kann die Nut vorzugsweise spiralförmig ausgeführt sein.

Beispielsweise kann das Anschlagelement durch eine einfache Umbiegung am Ende des beispielsweise als Draht oder Band ausgebildeten Halteelements ausgebildet sein. Insbesondere in diesem Fall kann das Anschlagelement einstückig mit dem Halteelement ausgebildet sein. Eine weitere bevorzugte Ausführungsform besteht darin, dass das Anschlagelement eine ringförmige Scheibe mit einer Durchgangsöffnung zum Durchführen des Schafts ist. Hierdurch kann bei geringem Herstellungsaufwand die Handhabbarkeit und, unter anderem weil ein relativ grosser Auflagebereich gegeben ist, die Zuverlässigkeit noch weiter verbessert werden. Die ringförmige Scheibe kann einen geschlossenen Ring oder auch einen offenen Ring bilden, wobei die Ringöffnung beispielsweise zum Einführen des Schafts dienen kann.

Das Massenreservoir kann beispielsweise an der Schraube angeordnet sein. Besonders bevorzugt ist es jedoch, dass das Massenreservoir, insbesondere vor Beginn des Auspressvorgangs, am Auspressteller angeordnet ist. Dies kann unter anderem den Herstellungsaufwand reduzieren und die Handhabbarkeit und Zuverlässigkeit verbessern. Der Auspressteller kann flach oder auch gekrümmt, beispielsweise mit einer zentralen Vertiefung, ausgeführt sein. Der Auspressteller kann auch Durchbrechungen aufweisen.

Weiterhin ist es bevorzugt, dass der Auspressteller einen Dichtkragen aufweist. Insbesondere kann der Dichtkragen zum, vorzugsweise bündigen, Aufnehmen des vorderen Endes des Schafts vorgesehen sein. Gemäss dieser Ausführungsform kann der Auspressteller eine Halbschale, also einen Behälter, bilden, in welcher das Massenreservoir angeordnet ist, und in welche die Spitze des Schafts genau hineinpasst. Hierdurch kann ein besonders gut definierter Massestrom erhalten werden.

Die Erfindung betrifft auch ein Verfahren zum Setzen der Schraube einer erfindungsgemässen Befestigungsanordnung bei dem
- der Auspressteller und das Massenreservoir der Auspresseinheit der erfindungsgemäßen Befestigungsanordnung in das Bohrloch eingebracht werden und,
- insbesondere anschliessend, die Schraube in das Bohrloch eingeschraubt wird, wobei das Halteelement den Auspressteller axial im Bohrloch festlegt und der Auspressteller Masse aus dem Massenreservoir auspresst.

Besonders bevorzugt ist es, dass die zumindest eine Gewindewendel beim Einschrauben der Schraube ein Gegengewinde in das Substrat schneidet, dass also die Schraube als selbstschneidende Schraube wirkt. Beim Einschrauben der Schraube ist der Auspressteller dem vorderen Ende des Schafts vorgelagert ist, und das Massenreservoir ist zwischen dem Auspressteller und dem vorderen Ende des Schafts angeordnet. Die Masse wird insbesondere durch Verringerung des Volumens zwischen dem Auspressteller und dem vorderen Ende des Schafts aus dem Massenreservoir ausgepresst.

Vorzugsweise kann vorgesehen sein, dass der Auspressteller und das Massenreservoir der Auspresseinheit zunächst so tief in das Bohrloch eingebracht werden, bis das Anschlagelement am Mund des Bohrlochs anschlägt, und dass die Schraube anschliessend in das Bohrloch eingeschraubt wird. Gemäss dieser Ausführungsform wird zu Beginn der Installation zunächst die Auspresseinheit vollständig in das Bohrloch eingeführt und erst dann mit dem Einschrauben der Schraube, also mit der Rotation der Schraube um Ihre Längsachse begonnen. Hierdurch kann ein besonders gut definierter Auspressvorgang erhalten werden. Insbesondere können die Schraube und die Auspresseinheit voneinander getrennt zum Bohrloch geführt werden. Alternativ kann vorgesehen werden, dass die Auspresseinheit an der Schraube angeordnet wird, und dass anschliessend der Auspressteller und das Massenreservoir der Auspresseinheit in das Bohrloch eingebracht werden, wobei die Auspresseinheit und die Schraube beim Einbringen des Auspresstellers und des Massenreservoirs in das Bohrloch miteinander verbunden sind. Gemäss dieser Ausführungsform ist die Auspresseinheit an der Schraube vormontiert, und die Schraube und die Auspresseinheit werden als Verbund zum Bohrloch geführt. Dies kann den Aufwand beim Anwender weiter reduzieren kann. Insbesondere können die Schraube und die Auspresseinheit dem Anwender als Verbund geliefert werden.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine Seitenansicht einer erfindungsgemässen Befestigungsanordnung in einem Bohrloch in einem Substrat beim Setzen der Schraube;
- Figur 2:: die Befestigungsanordnung aus Figur 1 in perspektivischer Ansicht, wobei der Übersichtlichkeit halber das Substrat nicht gezeigt ist; und
- Figur 3:: eine Längsschnittansicht des vorderen Teils der Auspresseinheit, enthaltend insbesondere das Massenreservoir und den Auspressteller, der Befestigungsanordnung aus Figur 1.

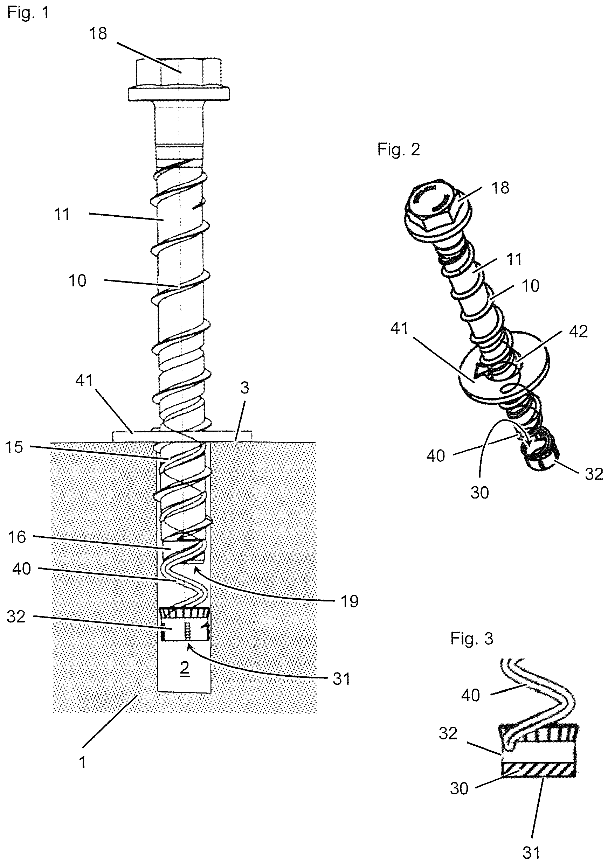

Die Figuren 1 bis 3 zeigen ein Ausführungsbeispiel einer erfindungsgemässen Befestigungsanordnung. Die Befestigungsanordnung weist eine Schraube mit einem etwa zylindrischen Schaft 11 auf, an dessen rückwärtigem Ende eine beispielhaft als Schraubenkopf 18 dargestellte Lastangriffseinrichtung zum Einleiten von Zugkräften in den Schaft 11 angeordnet ist. An der Umfangsfläche des Schafts 11 der Schraube ist eine spiralförmige selbstschneidende Gewindewendel 10 angeordnet.

Die Befestigungsanordnung weist ferner eine Auspresseinheit auf. Diese Auspresseinheit weist einen kreisscheibenförmigen Auspressteller 31 auf, der vorzugsweise etwa denselben Durchmesser wie der Schaft 11 der Schraube hat, und der bei zusammengefügter Befestigungsanordnung dem vorderen Ende 19 des Schafts 11 der Schraube axial vorgelagert ist. Wie insbesondere Figur 3 zeigt, ist am Auspressteller 31 ein Massenreservoir 30 enthaltend eine fliessfähige, auspressbare Masse angeordnet.

Im dargestellten Ausführungsbeispiel weist der Auspressteller 31 einen hülsenförmigen, insbesondere zylindrischen Dichtkragen 32 auf, der sich vom Auspressteller 31 zum vorderen Ende 19 des Schafts 11 der Schraube hin erstreckt. Der Auspressteller 31 bildet mit dem Dichtkragen 32 eine Halbschale, welche das Massenreservoir 30 aufnimmt.

Die Auspresseinheit weist ferner ein Anschlagelement 41 auf, das als ringförmige Scheibe mit einer Durchgangsöffnung 42 zum Durchführen des Schafts 11 der Schraube ausgebildet ist. Darüber hinaus weist die Auspresseinheit ein spiralförmiges, beispielsweise als Draht ausgeführtes Halteelement 40 auf, welches das Anschlagelement 41 mit dem Auspressteller 31 verbindet. Für die Verbindung mit dem Auspressteller 31 kann das Anschlagelement 41 beispielsweise am Dichtkragen 32 angeordnet sein.

Das spiralförmige Halteelement 40 und der Schaft 11 der Schraube sind so dimensioniert, dass das spiralförmige Halteelement 40 den Schaft 11 im Bereich des vorderen Endes 19 des Schafts 11 aufnehmen kann. Insbesondere kann der Schaft 11 im Bereich seines vorderen Endes 19 eine spiralförmige Nut 15 zum Aufnehmen des spiralförmigen Halteelements 40 aufweisen. Die Durchgangsöffnung 42 des Anschlagelements 41 und das spiralförmige Halteelement 40 sind koaxial angeordnet, so dass der Schaft 11 durch die Durchgangsöffnung 42 hindurch in das spiralförmige Halteelement 40 eingeführt werden kann. Der Auspressteller 31 ist in der axialen Verlängerung des Innenraums des spiralförmigen Halteelements 40 angeordnet.

Bei einer ersten Verfahrensalternative zum Setzen der Schraube der gezeigten Befestigungsanordnung in einem Bohrloch 2 in einem Substrat 1 ist die Auspresseinheit zunächst getrennt von der Schraube. Bei dieser Verfahrensalternative wird die Auspresseinheit getrennt von der Schraube in das Bohrloch 2 eingebracht und dabei das Massenreservoir 30 zusammen mit dem Auspressteller 31 so tief in das Bohrloch 2 eingebracht, bis das Anschlagelement 41 am Mund 3 des Bohrlochs 2 anschlägt. Sodann wird der Schaft 11 der Schraube durch die Durchgangsöffnung 42 im ringförmigen Anschlagelement 41 hindurch in das Bohrloch 2 eingeführt und die Gewindewendel 10 durch Aufbringen eines Drehmoments am Schraubenkopf 18 in das Substrat eingeschraubt. Die Schraube schraubt sich dabei in das spiralförmige Halteelement 40 und das Bohrloch 2. Dabei nähert sich das vordere Ende 19 des Schafts 11 axial an das Massenreservoir 30 und den Auspressteller 31 an, welche vom Anschlagelement 41 und vom Halteelement 40 axial fixiert sind, bis das vordere Ende 19 des Schafts 11 an das Massenreservoir 30 anschlägt. Beim weiteren Einschrauben wird das Massenreservoir 30 zwischen dem axial vorrückenden vorderen Ende 19 des Schafts 11 und dem axial fixierten Auspressteller 31 axial komprimiert, so dass die im Massenreservoir 30 enthaltene fliessfähige Masse ausgepresst wird und in den Ringspalt zwischen Bohrlochwand und Schaft 11 gelangt, wo sie aushärten und die Schraube stabilisieren kann. Das Auspressen kann insbesondere mit einer Zerstörung des Massenreservoirs 30 einhergehen.

In einer alternativen zweiten Verfahrensalternative kann die Auspresseinheit auch vorab mit der Schraube verbunden werden und die Auspresseinheit im Verbund mit der Schraube in das Bohrloch 2 eingebracht werden. Ansonsten kann wie im Zusammenhang mit der ersten Verfahrensalternative beschrieben vorgegangen werden.

Wie insbesondere in Figur 1 erkennbar ist, weist der Schaft 11 im Anschluss an sein vorderes Ende 19 einen gewindefreien, durchmesserkleineren Spitzenbereich 16 auf. Dieser Spitzenbereich 16 des Schafts 11 gelangt beim Einschrauben in den Dichtkragen 32 des Auspresstellers 31.

## Patentansprüche

1. Befestigungsanordnung
- mit einer Schraube, welche einen Schaft (11) mit einem vorderen Ende (19) zum Einführen in ein Bohrloch (2) in einem Substrat (1) und zumindest eine Gewindewendel (10) aufweist, wobei die Gewindewendel (10) am Schaft (11) angeordnet ist, und
- mit einer Auspresseinheit, welche ein Massenreservoir (30) enthaltend eine Masse zum Verfüllen eines Spalts zwischen dem Schaft (11) und der Wand des Bohrlochs (2), einen Auspressteller (31), an welchen das vordere Ende (19) des Schafts (11) zum Auspressen der Masse aus dem Massenreservoir (30) heranführbar ist, und ein Halteelement (40) zum Festlegen des Auspresstellers (31) im Bohrloch (2) aufweist, wobei am Halteelement (40) einerseits der Auspressteller (31) und andererseits ein Anschlagelement (41) zum Anschlagen am Mund (3) des Bohrlochs (2) angeordnet ist, und wobei das Halteelement (40) das Anschlagelement (41) mit dem Auspressteller (31) verbindet,
**dadurch gekennzeichnet,**
- **dass** das das Anschlagelement (41) mit dem Auspressteller (31) verbindende Halteelement (40) spiralförmig ausgeführt ist.

2. Befestigungsanordnung nach Anspruch 1,
dass der Schaft (11) eine Nut (15) zum zumindest bereichsweisen Aufnehmen des Halteelements (40) aufweist.

3. Befestigungsanordnung nach einem der vorstehenden Ansprüche,
**dadurch gekennzeichnet,**
**dass** das Anschlagelement (41) eine ringförmige Scheibe mit einer Durchgangsöffnung (42) zum Durchführen des Schafts (11) ist.

4. Befestigungsanordnung nach einem der vorstehenden Ansprüche,
**dadurch gekennzeichnet,**
**dass** das Massenreservoir (30) am Auspressteller (31) angeordnet ist.

5. Befestigungsanordnung nach einem der vorstehenden Ansprüche,
**dadurch gekennzeichnet,**
**dass** der Auspressteller (31) einen Dichtkragen (32) zum Aufnehmen des vorderen Endes (19) des Schafts (11) aufweist.

6. Verfahren zum Setzen der Schraube einer Befestigungsanordnung nach einem der vorstehenden Ansprüche, bei dem
- der Auspressteller (31) und das Massenreservoir (30) der Auspresseinheit nach einem der vorstehenden Ansprüche in das Bohrloch (2) eingebracht werden und,
- insbesondere anschliessend, die Schraube in das Bohrloch (2) eingeschraubt wird, wobei das Halteelement (40) den Auspressteller (31) axial im Bohrloch (2) festlegt und der Auspressteller (31) Masse aus dem Massenreservoir (30) auspresst.

7. Verfahren nach Anspruch 6,
**dadurch gekennzeichnet,**
**dass** der Auspressteller (31) und das Massenreservoir (30) der Auspresseinheit zunächst so tief in das Bohrloch (2) eingebracht werden, bis das Anschlagelement (41) am Mund (3) des Bohrlochs (2) anschlägt, und dass die Schraube anschliessend in das Bohrloch (2) eingeschraubt wird.

8. Verfahren nach einem der Ansprüche 6 oder 7,
**dadurch gekennzeichnet,**
**dass** die Auspresseinheit an der Schraube angeordnet wird, und dass anschliessend der Auspressteller (31) und das Massenreservoir (30) der Auspresseinheit in das Bohrloch (2) eingebracht werden, wobei die Auspresseinheit und die Schraube beim Einbringen des Auspresstellers (31) und des Massenreservoirs (30) in das Bohrloch (2) miteinander verbunden sind.

## Claims

1. Fastening arrangement
- with a screw, which has a shaft (11) with a front end (19) for putting into a hole (2) in a substrate (1) and at least one thread spiral (10), in which the thread spiral (10) is arranged on the shaft (11), and
- with a squeezing unit, which has a mass reservoir (30) containing a mass for filling a gap between the shaft (11) and the wall of the hole (2), a squeezing plate (31), to which the front end (19) of the shaft (11) may be brought for squeezing the mass out of the mass reservoir (30), and a holding element (40) for fixing the squeezing plate (31) in the hole (2), in which on the one hand the squeezing plate (31) is arranged on the holding element (40) and on the other hand a stop element (41) for stopping is arranged at the mouth (3) of the hole (2), and in which the holding element (40) connects the stop element (41) with the squeezing plate (31),
**characterised in that**
- the holding element (40) connecting the stop element (41) with the squeezing plate (31) is made in the shape of a spiral.

2. Fastening arrangement according to claim 1,
the shaft (11) has a groove (15) for taking the holding element (40) at least in certain areas.

3. Fastening arrangement according to one of the previous claims,
**characterised in that**
the stop element (41) is a ring-shaped disc with an opening (42) for the shaft (11) to go through.

4. Fastening arrangement according to one of the previous claims,
**characterised in that**
the mass reservoir (30) is arranged on the squeezing plate (31).

5. Fastening arrangement according to one of the previous claims,
**characterised in that**
the squeezing plate (31) has a sealing collar (32) for taking the front end (19) of the shaft (11).

6. Method for setting the screw of a fastening arrangement according to one of the previous claims, in which
- the squeezing plate (31) and the mass reservoir (30) of the squeezing unit according to one of the previous claims are put into the hole (2) and
- in particular then the screw is screwed into the hole (2), in which the holding element (40) fixes the squeezing plate (31) axially in the hole (2) and the squeezing plate (31) squeezes mass out of the mass reservoir (30).

7. Method according to claim 6,
**characterised in that**
first the squeezing plate (31) and the mass reservoir (30) of the squeezing unit are put into the hole (2) so deep that the stop element (41) stops at the mouth (3) of the hole (2) and then the screw is screwed into the hole (2).

8. Method according to one of claims 6 or 7,
**characterised in that**
the squeezing unit is arranged on the screw and then the squeezing plate (31) and the mass reservoir (30) of the squeezing unit are put into the hole (2), in which the squeezing unit and the screw are connected to each other when the squeezing plate (31) and the mass reservoir (30) are put into the hole (2).

## Revendications

1. Agencement de fixation comportant :
- une vis comportant une tige (11) ayant une extrémité avant (19) destinée à être introduite dans un trou percé (2) dans un substrat (1) et au moins un filetage en hélice (10), le filetage en hélice (10) étant agencé sur la tige (11), et
- une unité d'éjection par pression comportant un réservoir de composé (30) contenant un composé destiné à remplir un espace entre la tige (11) et la paroi du trou percé (2), un disque d'éjection par pression (31) vers lequel l'extrémité avant (19) de la tige (11) peut être amenée pour éjecter par pression le composé hors du réservoir de composé (30), et un élément de retenue (40) pour fixer le disque d'éjection par pression (31) dans le trou percé (2), dans lequel sur l'élément de retenue (40) est agencé d'un côté le disque d'éjection par pression (31) et de l'autre côté un élément de butée (41) destiné à venir en butée contre l'ouverture (3) du trou percé (2), et dans lequel l'élément de retenue (40) relie l'élément de butée (41) et le disque d'éjection par pression (31),
**caractérisé en ce que**
- l'élément de retenue (40) reliant l'élément de butée (41) et le disque d'éjection par pression (31) est configuré avec une forme hélicoïdale.

2. Agencement de fixation selon la revendication 1,
**caractérisé en ce que** la tige (11) comporte une gorge (15) pour recevoir, au moins dans certaines zones, l'élément de retenue (40).

3. Agencement de fixation selon l'une des revendications précédentes,
**caractérisé en ce que**
l'élément de butée (41) est un disque annulaire avec une ouverture de passage (42) pour le passage de la tige (11).

4. Agencement de fixation selon l'une des revendications précédentes,
**caractérisé en ce que**
le réservoir de composé (30) est agencé sur le disque d'éjection par pression (31).

5. Agencement de fixation selon l'une des revendications précédentes,
**caractérisé en ce que**
le disque d'éjection par pression (31) comporte une collerette d'étanchéité (32) pour recevoir l'extrémité avant (19) de la tige (11).

6. Procédé pour poser la vis d'un dispositif de fixation selon l'une des revendications précédentes, dans lequel
- le disque d'éjection par pression (31) et le réservoir de composé (30) de l'unité d'éjection par pression selon l'une des revendications précédentes sont introduits dans le trou percé (2) et
- en particulier, la vis est ensuite vissée dans le trou percé (2), l'élément de retenue (40) fixant le disque d'éjection par pression (31) axialement dans le trou percé (2) et le disque d'éjection par pression (31) éjectant par pression le composé hors du réservoir de composé (30).

7. Procédé selon la revendication 6,
**caractérisé en ce que**
le disque d'éjection par pression (31) et le réservoir de composé (30) de l'unité d'éjection par pression sont d'abord introduits dans le trou percé (2) à une profondeur telle que l'élément de butée (41) vient en butée contre l'ouverture (3) du trou percé (2), et la vis est ensuite vissée dans le trou percé (2).

8. Procédé selon l'une des revendications 6 ou 7,
**caractérisé en ce que**
l'unité d'éjection par pression est agencée sur la vis, et le disque d'éjection par pression (31) et le réservoir de composé (30) de l'unité d'éjection par pression sont ensuite introduits dans le trou percé (2), l'unité d'éjection par pression et la vis étant assemblées l'une à l'autre dans le trou percé (2) en introduisant le disque d'éjection par pression (31) et le réservoir de composé (30) dans le trou percé (2).
